# EUROPEAN PATENT APPLICATION

(11) **EP 3 438 485 A1**
(43) Date of publication of application: **06.02.2019**
(21) Application number: 18185664.2
(22) Date of filing: 26.07.2018
(51) Int. Cl.: F16C 35/063, F16C 3/02, F16C 19/06, F16C 35/067, F16C 25/06

(54) **BEARING ASSEMBLY, MOTOR, AND METHOD OF ASSEMBLING BEARING ASSEMBLY**

(30) Priority: 31.07.2017 JP 2017148039
(71) Applicant: Nidec Sankyo Corporation, Suwa-gun, Nagano 393-8511 (JP)
(72) Inventor: ISAJI, Naoya, Nagano, 393-8511 (JP); KUROSAWA, Hironori, Nagano, 393-8511 (JP)
(74) Representative: Becker Kurig Straus

(57) **Abstract**

[Objective] To provide a bearing assembly that can realize stable rotations even in a high temperature environment.

[Means to Achieve] The bearing assembly (10) comprises the bearing holder (11) formed of a cylindrical member, the rolling bearings (12, 13) press-fitted and fixed to the inside circumference of the bearing holder (11), the shaft member (14) which is inserted to the inner circumferential side of the rolling bearings (12, 13) and has the hollow portion (14a) at the position thereof opposing the rolling bearings (12, 13) in the radial direction, and the ball members (15, 16) press-fitted to the hollow portion (14a) of the shaft member (14) so as to press the shaft member (14) against the rolling bearings (12, 13) in the radial direction and secure them.

## Description

### [Field of Technology]

The present invention relates to a bearing assembly, a motor and a method of assembling a bearing assembly.

### [Background of Technology]

Conventionally known is a motor in which a bearing assembly containing a rolling bearing is arranged between a rotor portion and a stator portion. In such a motor, a sleeve is provided surrounding the bearing, and a bearing assembly is used in which the sleeve and the bearing are fixed to each other by an adhesive agent, to prevent an inner ring and an outer ring of the bearing from co-rotating (for example, Patent Reference 1).

### [Related Art]

### [Patent Reference]

[Patent Reference 1] Unexamined Japanese Patent Application 2013-44435 Publication

### [Summary of the Invention]

### [Problems and Objective]

However, the properties of an adhesive are easily affected by temperature. Therefore, when the above-mentioned bearing assembly is used in a motor to be mounted in a vehicle, for example, that is a motor which is supposed to be used in a high temperature environment of 100°C or more, the bonding strength between the sleeve and the bearing may be degraded, being also affected by the heated motor itself. As a result, it is difficult to prevent the inner ring and the outer ring of the bearing from co-rotation, and thus making it difficult to obtain stable rotations in a high temperature environment. Further, a motor equipped with the above-described bearing assembly will have difficulty maintaining stable rotations due to vibrations and noise generated, shortening the life of the motor.

Considering the above problems, then, an objective of the present invention is to provide a bearing assembly, a motor and a method of assembling the bearing assembly which can realize stable rotations even in a high temperature environment and in turn prolong the life of the motor.

### [Means to Solve the Problems]

To achieve the above-described objective, a bearing assembly of the present invention comprises a bearing holder composed of a cylindrical member, a rolling bearing which is press-fitted and fixed to the inside circumference of the bearing holder, a shaft member which is inserted on the inner circumferential side of the rolling bearing and has a hollow portion formed at the position where said shaft member and said rolling bearing are opposite in the radial direction, and a ball member which is press-fitted to the hollow portion of the bearing member to press and fix the shaft member against the rolling bearing in the radial direction.

In the bearing assembly of the present invention, the rolling bearing can be fixed to both the bearing holder and the shaft member without using an adhesive. As a result, it is possible to prevent the co-rotation in the rolling bearing even in a high temperature environment and to realize stable rotations.

In the present invention, it is preferred that the ball member be positioned such that the center thereof approximately aligns with the center of a rolling element of the rolling bearing when viewed in the axial direction of the shaft member. With this configuration, the shaft member and the rolling bearing can be fixed to each other more firmly.

In the present invention, it is preferred that the linear expansion coefficient of the rolling bearing be larger than that of the bearing holder and that of the shaft member. This makes it possible to increase the pressure of the rolling bearing toward the bearing holder and the shaft member as the temperature rises, and therefore, to improve the fixing strength; and thus, the co-rotation of the rolling bearing can be prevented with certainty even in a high temperature environment.

In the present invention, it is preferred that the shaft member be fixed to the rolling bearing while a preload is applied to the rolling bearing. In this way, there is no need to provide a member for applying a preload to the bearing, reducing the manufacturing cost.

In the present invention, two of the rolling bearings may be press-fitted and fixed to the inside circumference of the bearing holder; in this case, it is preferred that the bearing holder be positioned on one end portion of the shaft member. This configuration makes it possible for the bearing holder, that is the rolling bearing, to be arranged far from a heat source, and therefore, even when [the rolling bearings are used] in a high temperature environment, it is possible to prevent the performance of the rolling bearings from being degraded, which is normally caused by the temperature increase.

In the present invention, it is preferred that, when two rolling bearings are provided, two ball members are press-fitted into the hollow portion of the shaft member.

The present invention is also characterized by the fact that a motor has a rotor which is fixed to either the bearing holder or the shaft member and a stator which is fixed to another of either the bearing holder or the shaft member. In the motor of the present invention, the co-rotation of the rolling bearing can be prevented to maintain stable rotations, which in turn prolongs the life of the motor.

Further, a method of assembling a bearing assembly of the present invention includes a process in which a rolling bearing is press-fitted and fixed to the inside circumference of a bearing holder composed of a cylindrical member, a process in which a shaft member having a hollow portion formed therein is inserted to the inner circumferential side of the rolling bearing such that the hollow portion and the rolling bearing are opposed to each other in the radial direction, and a process in which a ball member is press-fitted to the hollow portion of the shaft member to press the shaft member against the rolling bearing in the radial direction.

By the method of assembling a bearing assembly of the present invention, the rolling bearing can be fixed to either the bearing holder or the shaft member without using an adhesive. Consequently, the co-rotation of the rolling bearing can be prevented, and therefore, stable rotations are ensured even in a high temperature environment, promoting the longer life of the rolling bearing.

In the present invention, it is preferred that the process for press-fitting the ball member include press-fitting the ball member while a preload is applied to the rolling bearing.

In the present invention, it is preferred that a process to be performed after press-fitting the ball member be further provided to press-fit and fix another rolling bearing to the inside circumference of the bearing holder such that the shaft member is inserted into (the inner circumference) of another rolling bearing and the hollow portion of the shaft member and another rolling bearing are opposed to each other in the radial direction, and a process also be provided to press-fit another ball member to the hollow portion of the shaft member to press the shaft member against another bearing in the radial direction. In this case, it is preferred that the process for press-fitting another ball member be performed while a preload is applied to another rolling bearing.

### [Effects of the Invention]

As described above, the bearing assembly and the method of assembling a bearing assembly of the present invention can realize the stable rotations even in a high temperature environment. Also, in the motor of the present invention, the co-rotation of the rolling bearing can be prevented to maintain the stable rotations even in a high temperature environment, promoting the longer life of the motor.

### [Brief Description of the Drawing]

Fig. 1 shows a cross-sectional view of a motor which is equipped with a bearing assembly of an embodiment of the present invention.
Fig. 2 (a) through Fig. 2 (e) show cross-sectional views of the process of a manufacturing method of the bearing assembly of the embodiment.

### [Detailed Description of the Invention]

An embodiment of the present invention is described hereinafter referring to the drawings. In this specification, a bearing assembly of the present invention is described using an example of its application in a motor; however, it is not limited to this example, but can also be applied to a pump or compressor. Also, the motor in which the present invention is applied may not only be one in which a rotor is fixed to a shaft (member) and a stator is fixed to a sleeve (a cylindrical member) as described in this specification, but also one in which a rotor is fixed to a sleeve and a stator is fixed to a shaft.

### (Overall Configuration of Motor)

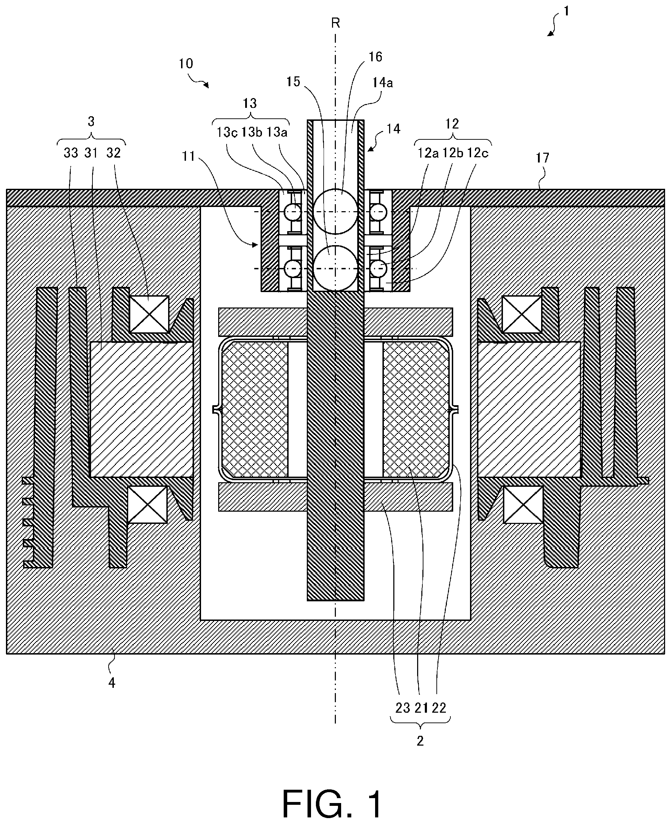

Fig. 1 is a cross-sectional view of a motor which is equipped with a bearing assembly of an embodiment of the present invention. In this figure, the direction of the axis of rotation of the motor is the top-bottom direction. For convenience of description, the direction of the axis of rotation of the motor is noted as "the axial direction," and the radial direction or the circumferential direction, which has the axis of rotation as the center, is respectively noted as "the radial direction" or "the circumferential direction."

A motor 1 which is an inner rotor type molded motor in a so-called cantilever type bearing structure has a rotor portion 2, a stator portion 3, a housing 4 and a bearing assembly 10.

### (Rotor Portion)

The rotor portion 2 secured to a shaft 14 is a rotor which rotates with the shaft 14, and has a rotor magnet 21, a magnet cover 22 and a plate 23.

The rotor magnet 21 is a permanent magnet elongated in the axial direction and arranged along the circumferential direction around the shaft 14. The outside circumference of the rotor magnet 21 is made to be a magnetic pole face which is opposed to the stator portion 3 in the radial direction; the magnetic pole face is polarized with N-pole and S-pole alternately in the circumferential direction. The magnetic cover 22 is provided to cover the rotor magnet 21 so that the rotor magnet made of ferrite is prevented from scattering. At both ends of the magnet cover 22 in the axial direction, a plate 23 composed of a nonmagnetic material such as stainless steel is provided. The plate 23 is given elasticity on the surface thereof opposing the magnet cover 22 by a dish spring, for example. As the magnet cover 22 is pressed to the plate 23, the rotor magnet 21 is fastened tightly by the urging force of the elastic portion. Also, the plate 23 is provided with a function which adjusts the rotor balance of the motor after the rotor portion 2 is assembled. More specifically, a hole is formed in the plate 23 to measure and adjust the rotor balance.

### (Stator Portion)

The stator portion 3, arranged in a cylindrical manner around the stator portion 2, is a stator which functions as an electric element of the motor 1. In this embodiment, the stator portion 3 has a stator core 31, a coil 32 and an insulator 33. The stator portion 3 is embedded inside a housing 4, which is composed of an insulating resin with high heat resistance, such as a polyphenylene sulfide (PPS), while having the inner circumferential surface thereof exposed, so that the inner circumferential surface is opposed to the outer circumferential surface of the rotor magnet 21 with a space therebetween.

The stator core 31 is composed of a layered steel sheet in which multiple magnetic steel sheets such as silicon steel sheets are layered in the axial direction. Each magnetic steel sheet has an annular portion and multiple magnetic teeth which protrude from the annular portion toward the inside in the radial direction. In other words, the inner circumferential surface of the stator portion 3 is configured by the end surface of the magnetic teeth. The coil 32 is composed of a wire which is wound around the magnetic teeth of the stator core 31 via the insulator 33. The insulator 33, composed of an insulating resin such as PPS, insulates the stator core 31 and the coil 32 electrically.

Because of the above configuration, a magnetic flux is generated in the radial direction along the magnetic pole teeth, which is the magnetic core, when a drive current is applied to the coil 32. Then, a torque is generated in the circumferential direction between the magnetic pole teeth and the rotor magnet 21, and the rotor portion 2 rotates together with the shaft 14, having the center axis of the shaft 14 as a rotation axis R.

The housing 4 is formed in a cylindrical shape with the top open and the bottom closed, and the rotor portion 2 is stored in the inside space of the housing 4. The housing 4 is formed by a so-called insert-mold. In other words, the housing 4 is formed such that, after the stator portion 3 is inserted into a mold, resin is poured into the mold and the stator portion 3 is covered by the resin, and thus the stator portion 3 and the housing 4 are integrally formed.

### (Bearing Assembly)

The bearing assembly 10 supports the rotor portion 2 and the stator portion 3 relatively-rotatably, and has a bearing holder 11, two rolling bearings 12 and 13, a shaft 14 and balls 15 and 16 as two ball members.

The bearing holder 11 is a metallic cylindrical member elongated in the axial direction and is arranged on the output side of the motor 1 to oppose the rotor portion 2. The bearing holder 11 has a flange portion 17, which is provided integrally with the bearing holder 11, at its other end portion from the one opposing the rotor 2 (hereinafter noted as "the non-rotor side"). The flange portion 17 is secured on the top surface of the housing 4, covering the opening of the housing 4. Note that the housing portion 17 is not necessarily integral to the bearing holder 11. For example, another cylindrical member to which the flange portion 17 is integrally formed may be provided outside the bearing holder 11 in the radial direction and be secured to the bearing holder 11 by a method of welding, etc. The length of the bearing holder 11 in the axial direction is set to create a space between the two rolling bearings 12 and 13 when they are press-fitted to the inside circumference of the bearing holder 11.

The two rolling bearings 12 and 13 are press-fitted and secured to the inside circumference of the bearing holder 11. More specifically, the first rolling bearing 12 is press-fitted to the inside circumference of the bearing holder 11, taking the position on the side opposing the rotor 12 (hereinafter noted as "the rotor side"); the second rolling bearing 13 is press-fitted to the inside circumference of the bearing holder 11, taking the position on the non-rotor side. The bottom surface of the first rolling bearing 12 (on the rotor side) is in the same plane as the bottom surface (the end surface on the rotor side) of the bearing holder 11; the top surface of the second rolling bearing (on the non-rotor side) is in the same plane as the top surface (the end surface on the non-rotor side) of the bearing holder 11, that is the same plane as the outer surface of the bearing holder 11.

The first rolling bearing 12 is a ball bearing equipped with an inner ring 12a, at least two rolling elements 12b and an outer ring 12c for rotatably supporting the shaft 14. The inner ring 12a and the outer ring 12c are respectively a metallic annular member; the outer ring 12c is arranged outside the inner ring 12a in the radial direction. The rolling element 12b is a spherical member; the multiple rolling elements 12b are arranged between the outside circumferential surface of the inner ring 12a and the inside circumferential surface of the outer ring 12c. The second rolling bearing 13 is a ball bearing equipped with an inner ring 13a, at least two rolling elements 13b and an outer ring 13c for rotatably supporting the shaft 14. The inner ring 13a and the outer ring 13c are also respectively a metallic annular member; the outer ring 13c is arranged outside the inner ring 13a in the radial direction. The rolling element 13b is a spherical member; the multiple rolling elements 13b are arranged between the outside circumferential surface of the inner ring 13a and the inside circumferential surface of the outer ring 13c. The first rolling bearing 12 and the second rolling bearing 13 are in the same shape and the size.

The shaft (the shaft member) 14, which is a metallic column member elongated in the axial direction, is inserted to the inner circumferential side of the rolling bearings 12 and 13 and secured to the rolling bearings 12 and 13 while a preload is applied to the rolling bearings. With this, the shaft 14 is supported by the two rolling bearings 12 and 13 and can rotate having its center as the rotation axis R. Also, the shaft 14 is formed with a hollow portion 14a therein which opens to the output side of the motor 1. The hollow portion 14a is formed down to the position in the shaft 14 which opposes the first rolling bearing 12.

Two balls (ball members) 15 and 16 are respectively press-fitted to the hollow portion 14a of the shaft 14. More specifically described, the first ball 15 is pressed fitted all the way to the position in the hollow portion 14a, which opposes the first rolling bearing 12; the second ball 16 is press-fitted all the way to the position in the hollow portion 14, which opposes the second rolling bearing 12. As configured in this way, the shaft 14 is pressed against the rolling bearings 12 and 13 in the radial direction so that the shaft 14 is fixed to the rolling bearings 12 and 13. Therefore, each ball 15, 16 has an outside diameter slightly larger than the inside diameter of the hollow portion 14a of the shaft 14; the shaft 14 has an outside diameter slightly smaller than the inside diameter of the rolling bearing 12, 13. In this embodiment, also, the ball 15, 16 is a steel ball formed of a hard material such as stainless steel. In this embodiment, each ball 15, 16 is arranged inside the hollow portion 14 such that the center thereof approximately aligns with the center of the rolling element (ball) of the corresponding rolling bearing 12 or 13. In this way, the shaft 14 and the rolling bearings 12 and 13 can be tightly secured to each other. Also, a gap between the inside diameter of the shaft 14 and the outside diameter of the first and second rolling bearings 12 and 13 can be properly managed.

Thus, according to this embodiment, the rolling bearings 12 and 13 can be fixed to the bearing holder 11 by press-fitting and the shaft 14 can be fixed to the rolling bearings 12 and 13 by pressing. In this manner, the rolling bearings 12 and 13 can be fixed to both the bearing holder 11 and the shaft 14 without using an adhesive. As a result, the co-rotation of the rolling bearings 12 and 13 is prevented even in a high temperature environment (more than 100°C, for example), and therefore, the motor 1 can maintain stable rotations, promoting the longer life of the motor 1. Further, in this embodiment, the shaft 14 is fixed while to the rolling bearings 12 and 13 a preload is applied; therefore, there is no need to equip a member (such as a preload spring) for applying a preload, reducing the manufacturing cost. For example, it used to take several minutes for an adhesive to cure; however, this process can shorten this time as well as ensures a tight fixing.

Note that it is preferred that the linear expansion coefficient of the rolling bearing 12, 13 be the same as that of the bearing holder 11 and the shaft 14, and it is even more preferred if the linear expansion coefficient of the rolling bearing 12, 13 is larger than that of the bearing holder 11 and the shaft 14. When the linear expansion coefficient of the rolling bearing 12, 13 is larger than that of the bearing holder 11 and the shaft 14, the pressure the rolling bearing 12, 13 applies to the bearing holder 11 and the shaft 14 will be increased as the temperature rises to improve the fixing strength of the rolling bearing 12, 13 to the bearing holder 11 and the shaft 14. With this, co-rotation of the rolling bearings 12 and 13 in a high temperature environment can be prevented with more certainty.

### (Method of Assembling Bearing Assembly)

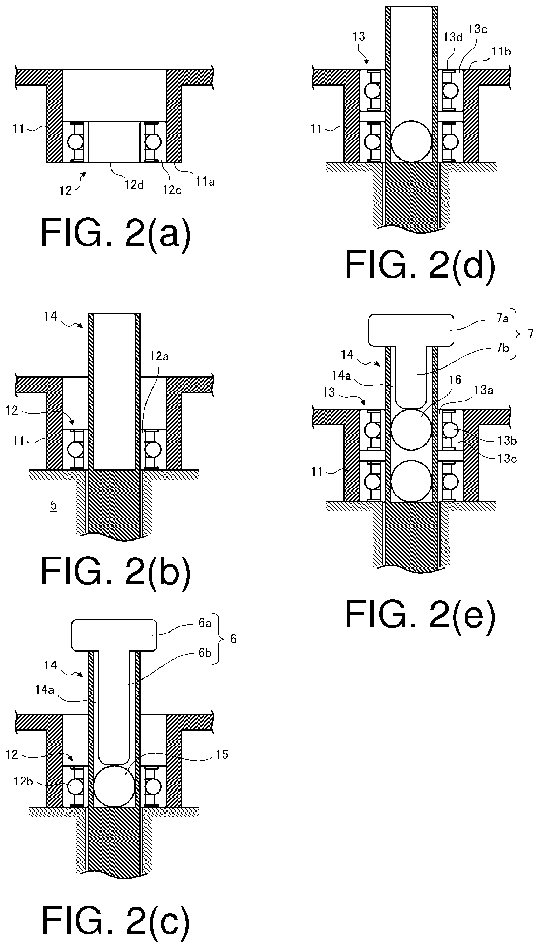

Next is described a method of assembling a bearing assembly of this embodiment, referring to Fig. 2 (a) through Fig. 2 (e). Fig. 2 (a) through Fig. 2 (e) show cross-sectional views of the processes in the manufacturing method of the bearing assembly of this embodiment.

As shown in Fig. 2 (a), the first rolling bearing 12 is press-fitted to the inside circumference of the bearing holder 11. More specifically described, the first rolling bearing 12 is press-fitted such that the bottom surface 12d of the first rolling bearing 12 lies in the same plane as the bottom surface 11a of the bearing holder 11. With this, the first rolling bearing 12 is fixed while the positioning of the outer ring 12c of the first rolling bearing 12 is determined with respect to the bearing holder 11.

As shown in Fig. 2 (b), the shaft 14 is inserted to the inner circumferential side of the first rolling bearing 12. Note that, while the bearing holder 11 is pushed to and held by a bearing holder holding tool 5, the shaft 14 is inserted to the inside circumference of the first rolling bearing 12 via a through hole of the bearing holder holding tool 5.

As shown in Fig. 2 (c), the first ball 15 is press-fitted to the hollow portion 14a of the shaft 14 by using a press-fitting jig 6 which is constructed with a head portion 6a and a shaft portion 6b extending from the head portion 6a. More specifically described, while a preload is applied to the first rolling bearing 12 in the same manner as the above-described process, the first ball 15 is press-fitted until the center of the first ball 15 comes to approximately align with the center of the rolling element (ball) 12b of the first rolling bearing 12 when viewed in the axial direction. In this embodiment, the position of the first ball 15 can be determined by adjusting the length of the shaft portion 6b of the press-fitting jig 6 in advance. Then, when the shaft 14 is pressed against the first rolling bearing 12 in the radial direction, the shaft 14 is fixed to the first rolling bearing 12 while a preload is applied to the first rolling bearing 12. Note that a preload is applied to the outer ring 12c of the first rolling bearing 12 when the first ball 15 is press-fitted to the shaft 14. More simply described, (with respect to the outer ring 12c that is fixed to the bearing holder 11) the shaft 14 is inserted to the first rolling bearing 12 under the condition where the inner ring 12a is pressed by the pressing jig (no illustration) toward the rotor side (to the right in the figure).

As shown in Fig. 2 (d), the second rolling bearing 13 is press-fitted to the inside circumference of the bearing holder 11. More specifically described, the second rolling bearing 13 is press-fitted such that the top surface 13d of the second rolling bearing 13 lies in the same plane as the top surface 11b of the bearing holder 11. With this, the second rolling bearing 13 is fixed while the outer ring 13c of the second rolling bearing 13 is positioned with respect to the bearing holder 11.

As shown in Fig. 2 (e), the second ball 16 is press-fitted to the hollow portion 14a of the shaft 14 by using a press-fitting jig 7 which is constructed with a head portion 7a and a shaft portion 7b extending from the head portion 7a. More specifically described, under the condition where a preload is applied to the second rolling bearing 13, that is, where the inner ring 13a is pressed downwardly by the pressing jig (no illustration) (while the outer ring 13c is fixed (press-fitted) to the bearing holder 11), the second ball 16 is press-fitted until the center of the second ball 16 comes to approximately align with the center of the rolling element (ball) 13b of the second bearing 13 when viewed in the axial direction. Note that the positioning of the second ball 16 can be done by adjusting the length of the shaft portion 7b of the press-fitting jig 7 in advance. In this manner, the shaft 17 is pressed against the second rolling bearing 13 in the radial direction; therefore, while a preload is applied to the second rolling bearing 13, the shaft 14 is fixed to the second rolling bearing 13. Thus, the bearing assembly 10 is completed.

### (Major Effects of This Embodiment)

As described above, the bearing assembly 10 of this embodiment is assembled such that the first ball 15 and the second ball 16 are press-fitted into the hollow portion 14a formed in the shaft 14 of the motor 1 and the first rolling bearing 12 and the second rolling bearing 13 are press-contacted in the radial direction and fixed to the shaft 14. Therefore, in the bearing assembly 10, the first and second rolling bearings 12 and 13 can respectively be fixed to the bearing holder 11 and the shaft 14 without using an adhesive. As a result, stable rotations can be obtained even in a high temperature environment, preventing the co-rotation of the first and second rolling bearings 12 and 13.

In this embodiment, the first and second balls 15 and 16 are arranged in the hollow portion 14a formed inside the shaft 14 such that the centers of the first and second balls 15 and 16 respectively align with the centers of the balls 12b and 13b of the corresponding first and second rolling bearings 12 and 13. With this, the tight fixing between the shaft 14 and the first and second rolling bearings 12 and 13 can be ensured.

In this embodiment, the linear expansion coefficient of the first, second rolling bearing 12, 13 is set to be the same as or larger than that of the bearing holder 11 and the shaft 14. In other words, the linear expansion coefficient of the first, second rolling bearing 12, 13 is larger than that of the bearing holder 11 and the shaft 14. Because of this, as the environmental temperature for the motor 1 of this embodiment rises, the pressure applied to the bearing holder 11 and the shaft 14 by the first and second rolling bearings 12 and 13 can be increased to improve the fixing strength of the first and second rolling bearings 12 and 13 to the bearing holder 11 and the shaft 14. Therefore, the co-rotation of the first and the second rolling bearings 12 and 13 can be prevented with certainty even in a high temperature environment.

This embodiment also has an advantage in that, since the shaft 14 is fixed while a preload is applied to the first and second rolling bearings 12 and 13, there is no need to equip a member (such as a preload spring) for applying a preload, thus reducing the manufacturing cost.

In this embodiment, the bearing holder 11, in which the first and second rolling bearings 12 and 13 are press-fitted and fixed to the inside circumference thereof, is arranged on one end portion of the shaft 14 on the non-rotor side. According to such a configuration, the first and second rolling bearings 12 and 13 which are press-fitted and fixed to the inside circumference of the bearing holder 11 can be positioned far from a heat source; therefore, even when used in a high temperature environment, the first and second rolling bearings 12 and 13 can be prevented from degrading their performance, which can happen as the temperature rises.

In the motor 1 of this embodiment, the rolling bearings 12 and 13 can be fixed to both the bearing holder 11 and the shaft 14 without using an adhesive; as a result, the bearing assembly 10 can maintain stable rotations, preventing the co-rotation of the rolling bearings 12 and 13 even in a high temperature environment (more than 100°C, for example). Therefore, a longer life of the motor 1 can be realized.

This embodiment uses an inner rotor type molded motor in a cantilever type bearing structure. Therefore, the bearing holder 11 and the first and second rolling bearings 12 and 13 can be arranged at locations far from the heat source; therefore, even in the situation where the temperature of the motor on the non-output side rises because [the motor] is placed next to a heat source in a high temperature environment, etc., the first and second rolling bearings 12 and 13 can be prevented from degrading their performance, which happens when the temperature rises.

The method of assembling the bearing assembly 10 of this embodiment includes the process for press-fitting and fixing the first and second rolling bearings 12 and 13 to the inside circumference of the bearing holder 11, the process for inserting the shaft 14 such that the hollow portion 14a of the shaft 14 and the first and second rolling bearings 12 and 13 are opposed to each other in the radial direction, and the process for press-fitting the first and second balls 15 and 16 into the hollow portion 14a to press the shaft 14 against the first and second rolling bearings 12 and 13 in the radial direction.

In such an assembly method, the first and second rolling bearings 12 and 13 can be fixed to both the bearing holder 11 and the shaft 14 without using an adhesive. As a result, the co-rotation of the first and second rolling bearings 12 and 13 is prevented and [the motor] can obtain stable rotations even in a high temperature environment. This in turn promotes a longer life of the first and second rolling bearings 12 and 13.

### (Other Embodiments)

The above-described embodiment is an example of the preferred embodiment of the present invention; however, it is not limited to this, but can be varied in different forms within the scope of the present invention.

In the above-described embodiment, although a ball bearing element is employed as the rolling bearing, it is not limited thereto. Any type of rolling bearing other than a ball bearing element, for example, a taper-roller bearing element may be employed.

In the above-described embodiment, an inner rotor type molded motor in a so-called cantilever type bearing structure is used as an example; however, the arrangement structure of the bearing is not limited to this example. For example, it may be a so-called double-shaft structured bearing in which two rolling bearings are arranged on both sides of a rotor portion in the axial direction.

### [Description of Codes]

- 1: Motor
- 2: Rotor portion
- 21: Rotor magnet
- 22: Magnet cover
- 23: Plate
- 3: Stator portion
- 31: Stator core
- 32: Coil
- 33: Insulator
- 4: Housing
- 5: Bearing holder holding tool
- 6, 7: Press-fitting jig
- 6a, 7a: Head portion
- 6b, 7b: Shaft portion
- 10: Bearing assembly
- 11: Bearing holder
- 11a: Bottom surface
- 11b: Top surface
- 12: First rolling bearing
- 13: Second rolling bearing
- 12a, 13a: Inner ring
- 12b, 13b: Rolling element
- 12c, 13c: Outer ring
- 12d: Bottom surface (of Second rolling bearing)
- 13d: Top surface (of Second rolling bearing)
- 14: Shaft
- 14a: Hollow portion
- 15: First ball
- 16: Second ball
- 17: Flange portion
- R: Rotation axis

## Claims

1. A bearing assembly (10) comprising:
a bearing holder (11) formed of a cylindrical member;
a rolling bearing (12, 13) which is press-fitted and fixed to an inside circumference of said bearing holder (11);
a shaft member (14) which is inserted to an inner circumference side of said rolling bearing (12, 13) and has a hollow portion (14a) at a position where said shaft member and said rolling bearing (12, 13) are opposite in a radial direction; and
a ball member (15, 16) which is press-fitted to said hollow portion (14a) of said shaft member (14) to press and fix said shaft member (14) against said rolling bearing (12, 13) in the radial direction.

2. The bearing assembly (10) as set forth in Claim 1, wherein
said ball member (15, 16) is arranged such that the center of said ball member (15, 16) aligns with the center of a rolling element (12b, 13b) of said rolling bearing (12, 13) when viewed in an axial direction of said shaft member (14).

3. The bearing assembly (10) as set forth in Claim 1 or 2 wherein
a linear expansion coefficient of said rolling bearing (12, 13) is larger than that of said bearing holder (11) and is also larger than that of said shaft member (14).

4. The bearing assembly (10) as set forth in any of Claim 1 through 3, wherein
said shaft member (14) is fixed to said rolling bearing (12, 13) while a preload is applied to said rolling bearing (12, 13).

5. The bearing assembly (10) as set forth in any of Claim 1 through 4, comprising:
two of said rolling bearings (12, 13) which are press-fitted and fixed to the inside circumference of said bearing holder (11).

6. The bearing assembly (10) as set forth in Claim 5, wherein
said bearing holder (11) is arranged at one end portion of said shaft member (14).

7. The bearing assembly (10) as set forth in Claim 5 or 6, comprising:
two of said ball members (15, 16) which are press-fitted to said hollow portion (14a) of said shaft member (14).

8. A motor (1) equipped with
the bearing assembly (10) according to any of Claim 1 through 7,
a rotor portion (2) fixed to either said bearing holder (11) or said shaft member (14), and
a stator portion (3) fixed to the other of said either said bearing holder (11) or
said shaft member (14).

9. A method of assembling a bearing assembly (10), comprising:
a process for press-fitting a rolling bearing (12, 13) to an inside circumference of a bearing holder (11) formed of a cylindrical member, and securing said rolling bearing (12, 13);
a process for inserting a shaft member (14) having a hollow portion (14a) to an inner circumferential side of said rolling bearing (12, 13) such that said hollow portion (14a) and said rolling bearing (12, 13) are opposed to each other in a radial direction; and
a process for press-fitting a ball member (15, 16) to said hollow portion (14a) of said shaft member (14) to press and fix said shaft member (14) against said rolling bearing (12, 13) in the radial direction.

10. A manufacturing method of the bearing assembly (10) according to Claim 9, wherein
in said process for press-fitting said ball member (15, 16), said ball member (15, 16) is press-fitted while a preload is applied to said rolling bearing (12, 13).

11. The manufacturing method for the bearing assembly (10) according to Claim 9 or 10, further comprising:
a process for, after press-fitting said ball member (15, 16), pressing-fitting another rolling bearing (12, 13) to an inside circumference of said bearing holder (11) to secure said another rolling bearing (12, 13) such that said shaft member (14) is inserted to the inner circumferential side of said another rolling bearing (12, 13), and said hollow portion (14a) of said shaft member (14) and said another rolling bearing (12, 13) are opposed to each other in the radial direction; and
a process for press-fitting another ball member (15, 16) to said hollow portion (14a) of said shaft member (14) and pressing and fixing said shaft member (14) against said another rolling bearing (12, 13) in the radial direction.

12. The manufacturing method for the bearing assembly (10) according to Claim 11, wherein
in said process for press-fitting said another ball member (15, 16), said another ball member (15, 16) is press-fitted while to said another rolling bearing (12, 13) a preload is applied.
